# EUROPÄISCHE PATENTSCHRIFT

(11) **EP 0 969 613 B1**
(45) Veröffentlichungstag und Bekanntmachung des Hinweises auf die Patenterteilung: **09.08.2006**
(21) Anmeldenummer: 99111343.2
(22) Anmeldetag: 10.06.1999
(51) Int. Cl.: H04B 10/08, H04J 14/02

(54) **Verfahren zur Überwachung der Signalqualität in optischen Netzen**
Method for monitoring the signal quality in optical networks
Procédé pour surveiller la qualité de signal dans des réseaux optiques

(30) Priorität: 29.06.1998 DE 19828971
(43) Veröffentlichungstag der Anmeldung: 05.01.2000
(73) Patentinhaber: SIEMENS AKTIENGESELLSCHAFT, 80333 München (DE)
(72) Erfinder: Heiles, Jürgen, 81371 München (DE)

(56) Entgegenhaltungen:
- DE-C- 19 730 294
- HIMMLER R ET AL: "SYNCHRONE LEITUNGSAUSRUESTUNG FUER 622 MBIT/S IN SDH-NETZEN" NTZ (NACHRICHTENTECHNISCHE ZEITSCHRIFT), VDE VERLAG GMBH. BERLIN, DE, Bd. 45, Nr. 6, 1. Juni 1992 (1992-06-01), Seiten 452-458, XP000304851 ISSN: 0027-707X

## Beschreibung

Zur Zeit erfolgt die Standardisierung optischer Transportnetze (OTN). Ein wesentliches Merkmal der Architektur von Transportnetzen ist die Unabhängigkeit der einzelnen übertragungsebenen, die die Übertragung zwischen unterschiedlichen Netzelementen, beispielsweise Verstärkern oder Multiplexern regeln. Diese Ebenen (Layer) können voneinander unabhängig geplant, verwaltet und überwacht werden.

In ntz Bd. 45 (1992) Heft 6, Seiten 452-458 beschreiben Himmler et al. Leitungsausrüstungen für SDH-Netze. Beidiesen werden Daten in normierten Datenblöcken übertragen, wodurch die Überwachung vereinfacht wird. Daher können für jeden Datenblocke Übertragungsfehler für die einzelnen Übertragungsabschnitte ermittelt werden.

Aufgabe der Erfindung ist es, ein ebenso geeignetes Verfahren zur Überwachung der Signalqualität bei einem transparenten optischen Transportnetz anzugeben.

Diese Aufgabe wird durch das in Anspruch 1 angegebene Verfahren gelöst.

In einem unabhängigen Anspruch ist eine weitere Lösung beschrieben.

Vorteilhafte Weiterbildungen sind in den Unteransprüchen angegeben.

Der Vorteil der Erfindung liegt in der exakten Übereinstimmung der gleiche Datenfolgen betreffenden Meßintervalle am Anfang und am Ende einer Übertragungsstrecke. Es können sowohl Überwachungsergebnisse von einer als auch mehreren Übertragungsstrecken über einen zugeordneten Service-Kanal übertragen werden.

Eine zentrale Stelle wertet die Meßergebnisse aus und kann bei sinkender Signalqualität geeignete Schritte veranlassen.

Die Erfindung wird anhand von Ausführungsbeispielen näher beschrieben.

Es zeigen:
- Figur 1: einen Abschnitt eines Optischen Transportnetzes,
- Figur 2: ein Prinzipschaltbild von Meßeinrichtungen am Anfang und Ende einer Übertragungsstrecke
- Figur 3: Daten eines Service-Kanals
- Figur 4: Daten eines Service-Kanals und
- Figur 5: ein Prinzipschaltbild von Meßeinrichtungen, die von einer zentralen Stelle gesteuert werden.

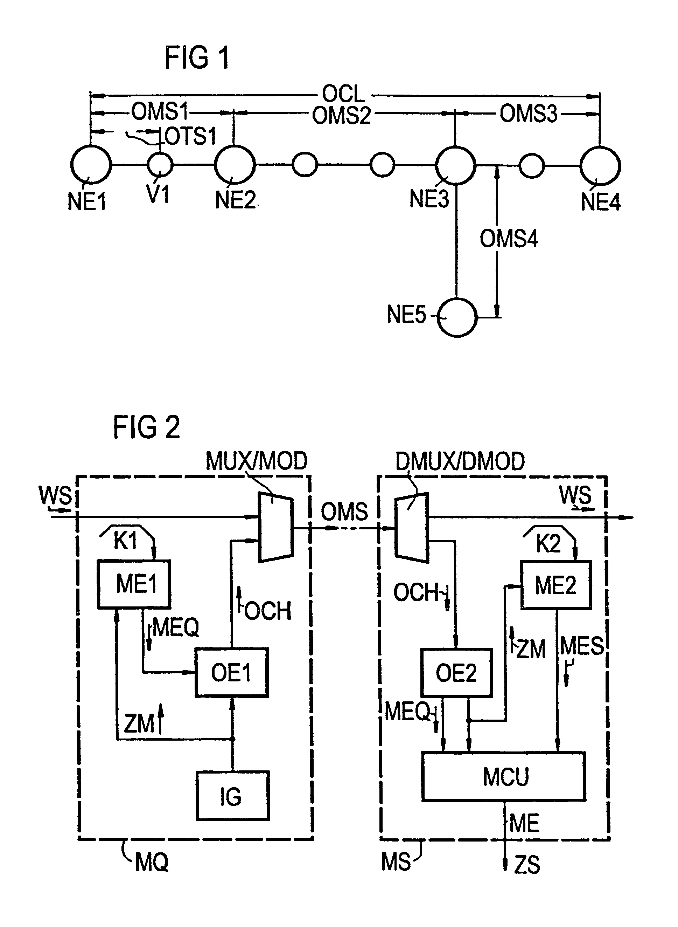

In **Figur 1** ist ein Ausschnitt eines optischen Transportnetzes dargestellt. Überwacht werden sollen die Übertragungsstrecken OMES1 bis OMES4 (Optical Multiplex Section Layer) jeweils zwischen zwei Netzelementen ME1 bis ME5. Die Übertragungsstrecken schließen optische Verstärker, beispielsweise V1, ein. Es ist prinzipiell auch möglich, kürzere Streckenabschnitte OTS, beispielsweise zwischen dem Netzelement NE1 und dem Verstärker V1, zu überwachen oder auch längere Streckenabschnitte OCL mit mehreren Netzelementen, beispielsweise zwischen den Netzelementen NE1 und NE4, zu überwachen.

In **Figur 2** sind eine sendeseitige Meßanordnung MQ und eine empfangsseitige Meßanordnung MS dargestellt. Bei der sendeseitigen Meßanordnung wird das zu Überprüfende Signal, das Nutzlast-Signal (Arbeitssignal) WS, beispielsweise eines Wellenlängen-Multiplexsignal (WDM-Signal) mit mehreren Übertragungskanälen, über einen ersten Koppler K1 einer ersten Meßeinrichtung ME1 zugeführt, wobei nur ein leistungsmäßig geringer Anteil ausgekoppelt werden muß. Diese Meßeinrichtung hat die Aufgabe, Messungen des Signalzustandes bzw. der Signalqualität am Anfang einer Übertragungsstrecke vorzunehmen. Signalparameter sind beispielsweise der optische Signal/Rauschabstand, der Leistungspegel oder die Frequenz.

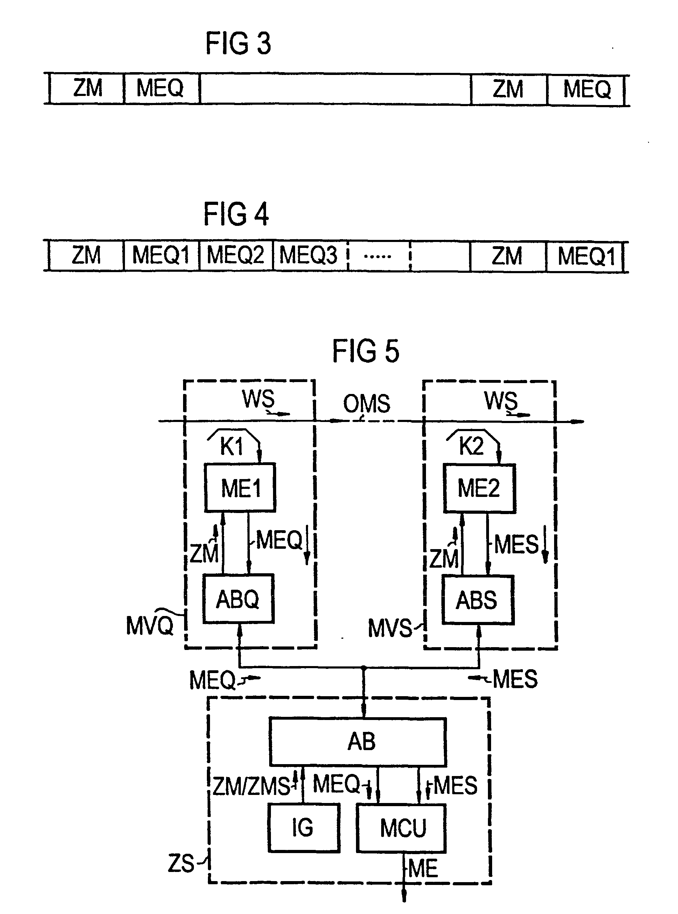

Die Dauer des Meßintervalls ist von dem zu messenden Signalparameter abhängig. Ein Meßintervallgenerator IG liefert entsprechend **Figur 3** hierzu periodisch Zeitmarken ZM, um sendeseitig und empfangsseitig - auf die übertragenen Daten bezogen - exakt dasselbe Meßintervall zu beurteilen.

In einer Overhead-Einrichtung OE1 wird der Service-Kanal (Überwachungskanal) generiert, indem Zeitmarken ZM und Meßwerte MEQ zusammengefaßt werden. Unmittelbar nach einer Zeitmarke wird beispielsweise der jeweilige Meßwert (Meßergebnis) MEQ des vorhergehenden Meßintervalls angefügt. Das Nutzsignal und der Service-Kanal werden in einem Multiplexer/Modulator MUX/MOD vor der Aussendung zusammengefaßt und anschließend über den gleichen Weg übertragen.

Die empfangsseitige Meßanordnung MS trennt durch einen Demultiplexer/Demodulator DMUX/DMOD den Service-Kanal OCH vom empfangenen Signal ab.

In einer zweiten Overhead-Einrichtung OE2 werden die Zeitmarken ZM decodiert und die empfangsseitigen Meßintervalle erzeugt. Die sendeseitigen Meßwerte werden einer Vergleichseinrichtung MCU zugeführt.

Das Nutzlast-Signal WS wird teilweise über einen zweiten Koppler K2 ausgekoppelt und einer zweiten Meßeinrichtung ME2 zugeführt. Innerhalb derselben Zeitintervalle - genau derselben Abschnitte des Nutzsignals - werden Qualitätsmessung des empfangenen Signals durchgeführt und die Meßwerte MES ebenfalls der Vergleichseinrichtung MCU zugeführt. Diese stellt anhand der sendeseitigen und empfangsseitigen Meßwerte fest, wieweit sich die Signalqualität geändert hat und sendet die Meßresultate ME an eine zentrale Stelle ZS.

Die zu Meßzwecken durchgeführte Auskopplung des Nutzlast-Signals kann bei der sendeseitigen Meßeinrichtung auch nach dem Multiplexer/Modulator MUX/MOD erfolgen (also am Anfang der eigentlichen Übertragungsstrecke), um dessen Einfluß auszuschließen. Ebenso gilt dies entsprechend für die empfangsseitige Auskopplung, die vor dem Demultiplexer/Demodulator erfolgen kann. Veränderungen des Meßwertes durch den Überwachungskanal können in der Regel unberücksichtigt bleiben aber erforderlichenfalls auch korrigiert werden.

Die Übertragung auf dem Service-Kanal wird den Erfordernissen angepaßt. So können auch entsprechend **Figur 4** jeweils eine Zeitmarke gefolgt von mehreren Meßwerten MEQ1, MEQ2, MEQ3,... für unterschiedliche Übertragungskanäle oder auch unterschiedliche Streckenabschnitte übertragen werden. Zum Aufmodulieren auf ein WDM-Signal wird beispielsweise die in der deutschen Patentanmeldung Aktenzeichen 19 713 952.3 beschriebene Spreizspektrummodulation verwendet.

In **Figur 5** sind Varianten der Meßeinrichtungen MVQ und MVS zur Realisierung eines Verfahrens dargestellt, bei dem auf die Übertragung von Zeitintervallen und Meßwerten über einen Service-Kanal verzichtet wird. Die Steuerung der Meßintervalle erfolgt hier von der zentralen Stelle ZS aus, bei der der Intervallgenerator IG vorgesehen ist. Von dieser Stelle wird über ihre Anschlußbaugruppe AB eine Zeitmarke zur Anschlußbaugruppe ABQ der sendeseitigen Meßeinrichtung und zur Anschlußbaugruppe ABS der empfangsseitigen Meßeinrichtung übertragen. Da hier Zugriffsprobleme auftreten können, ist es auch möglich, ein Synchronisiersignal ZMES zu übertragen, das jeweils in den Meßeinrichtungen vorhandene Intervallgeneratoren synchronisiert. Die Meßwerte MEQ und MES werden wiederum von den Meßeinrichtungen über die Anschlußbaugruppen zur zentralen Stelle ZS übertragen, die in der Vergleichseinrichtung MCU aus der Relation der Meßwerte das Meßresultat ME ermittelt.

## Patentansprüche

1. Verfahren zur Überwachung der Signalqualität in optischen Datennetzen,
**dadurch gekennzeichnet,**
**daß** am Anfang und Ende einer Übertragungsstrecke(OMS1, OMS2,....) die Signalqualität derselben Abschnitte eines Nutzlast-Signals (WS) innerhalb gleicher Meßintervalle gemessen wird,
**daß** die Zeitintervalle von einer sendeseitigen Meßanordnung (MQ) festgelegt und entsprechende Zeitmarken (ZM) sowie Meßergebnisse (MEQ) über einen Zusatzkanal (OCH) zu einer empfangsseitigen Meßanordnung (MES) am Ende der Übertragungsstrecke (OMS1, OMS2,...) gesendet werden, die diese Meßwerte (MEQ) und die mit Hilfe der empfangenen Zeitmarken ermittelten eigenen Meßwerte (MES) an eine zentrale Stelle (ZS) übermittelt oder selbst auswertet und ein Meßresultat (ME) übermittelt.

2. Verfahren nach Anspruch 1,
**dadurch gekennzeichnet,**
**daß** bei der Übertragung eines Wellenlängen-Multiplexsignals (WS) separate Messungen für jedes in einem WDM-Übertragungskanal übertragenen Nutzlast-Signals (WS) durchgeführt werden.

3. Verfahren nach einem der Anspruch 2,
**dadurch gekennzeichnet,**
**daß** jedem Nutzlast-Signals (WS) ein Service-Kanal (OCH) zugeordnet wird..

4. Verfahren nach Anspruch 1 oder 3,
**dadurch gekennzeichnet,**
**daß** dieselbe von der sendeseitigen Meßanordnung (MQ) generierte Zeitmarke (ZM) für mehrere Übertragungsstrecken (OMS1, OMS2, ...) oder Streckenabschnitte (OTS) verwendet wird,
**daß** die Meßergebnisse (MEQ1, MEQ2, ...) mehrerer Übertragungsstrecken (OMS1, OMS2, ..) oder Streckenabschnitte (OTS) über den Service-Kanal (OCH) übertragen werden und
**daß** von der Meßanordnung des letzten Streckenabschnitts (OMS2) die Meßwerte an die zentrale Stelle übermittelt werden.

5. Verfahren einem der Ansprüche 2 bis 4,
**dadurch gekennzeichnet,**
**daß** dieselbe von der sendeseitigen Meßanordnung (MQ) generierte Zeitmarke (ZM) von der empfangsseitigen Meßanordnung (MS) für Messungen in mehreren WDM-Übertragungskanälen verwendet wird.

6. Verfahren nach einem der Ansprüche 1 bis 5,
**dadurch gekennzeichnet,**
**daß** die Meßwerte (MEQ) als Zeitmultiplexsignal in einem Service-Kanal (OCH) übertragen werden.

7. Verfahren nach einem der Ansprüche 6,
**dadurch gekennzeichnet,**
**daß** die Zeitmarke (ZM) und die Meßwerte (MEQ) als Zeitmultiplexsignal in einem Service-Kanal (OCH) übertragen werden.

8. Verfahren nach einem der Ansprüche 2 bis5,
**dadurch gekennzeichnet,**
**daß** jeweils ein Service-Kanal (OCH) durch Überlagerungstechnik einem WDM-Übertragungskanal zugeordnet wird.

9. Verfahren nach einem der vorhergehenden Ansprüche,
**dadurch gekennzeichnet,**
**daß** in der empfangsseitigen Meßanordnung (MS) zusammengehörige Meßwerte (MEQ, MES) ausgewertet werden und
**daß** die von der Übertragungsstrecke (OMS1, OMS2,...) bedingte Änderung der Signalqualität als Meßresultat (ME) an die zentrale Stelle (ZS) übermittelt wird.

## Claims

1. Method for monitoring the signal quality in optical data networks
**characterised in that**
the signal quality of the same sections of a payload signal (WS) is measured within the same measuring intervals at the beginning and end of a transmission link (OMS1, OMS2, ...), that the time intervals are defined by a measuring arrangement (MQ) on the transmission side and corresponding time stamps (ZM) and measurement results (MEQ) are sent via an additional channel (OCH) to a measuring arrangement (MS) on the reception side at the end of the transmission link (OMS1, OMS2, ...), which measuring arrangement (MS) transmits said measured values (MEQ) and its own measured values (MES) determined with the aid of the received time stamps to a central point (ZS) or evaluates the values itself and transmits a measurement result (ME).

2. Method according to claim 1,
**characterised in that**
during the transmission of a wavelength division multiplex signal (WS) separate measurements are carried out for each payload signal (WS) transmitted in a WDM transmission channel.

3. Method according to claim 2,
**characterised in that**
a service channel (OCH) is assigned to each payload signal (WS).

4. Method according to claim 1 or 2,
**characterised in that**
the same time stamp (ZM) generated by the measuring arrangement (MQ) on the transmission side is used for a plurality of transmission links (OMS1, OMS2, ...) or link sections (OTS),
that the measurement results (MEQ1, MEQ2, ...) of a plurality of transmission links (OMS1, OMS2, ...) or link sections (OTS) are transmitted via the service channel (OCH), and
that the measured values are transmitted to the central point by the measuring arrangement of the last link section (OMS2).

5. Method according to one of the claims 2 to 4,
**characterised in that**
the same time stamp (ZM) generated by the measuring arrangement (MQ) on the transmission side is used by the measuring arrangement (MS) on the reception side for measurements in a plurality of WDM transmission channels.

6. Method according to one of the claims 1 to 5,
**characterised in that**
the measured values (MEQ) are transmitted as a time division multiplex signal in a service channel (OCH).

7. Method according to one of the claims 1 to 6,
**characterised in that**
the time stamp (ZM) and the measured values (MEQ) are transmitted as a time division multiplex signal in a service channel (OCH).

8. Method according to one of the claims 2 to 5,
**characterised in that**
a service channel (OCH) is assigned in each case to a WDM transmission channel by means of overlay techniques.

9. Method according to one of the preceding claims,
**characterised in that**
related measured values (MEQ, MES) are evaluated in the measuring arrangement (MS) on the reception side and
that the change in signal quality caused by the transmission link (OMS1, OMS2, ...) is transmitted to the central point (ZS) as the measurement result (ME).

## Revendications

1. Procédé pour surveiller la qualité de signal dans des réseaux optiques de données, **caractérisé en ce que**
au début et à la fin d'un trajet de transmission (OMS1, OMS2, ...), la qualité de signal des mêmes sections d'un signal de charge utile (WS) est mesurée à l'intérieur de mêmes intervalles de mesure,
les intervalles de temps sont déterminés par un ensemble de mesurage côté émetteur (MQ) et des marques temporelles (ZM) correspondantes ainsi que des résultats de mesure (MEQ) sont envoyés sur un canal supplémentaire (OCH) à un ensemble de mesurage côté récepteur (MES) à la fin du trajet de transmission (OMS1, OMS2, ...), lequel transmet à un point central (ZS) ces valeurs de mesure (MEQ) et les propres valeurs de mesure (MES) déterminées à l'aide des marques temporelles reçues ou les évalue lui-même et transmet un résultat de mesure (ME).

2. Procédé selon la revendication 1, **caractérisé en ce que**, lors de la transmission d'un signal de multiplexage en longueur d'onde (WS), des mesures séparées sont effectuées pour chaque signal de charge utile (WS) transmis dans un canal de transmission WDM.

3. Procédé selon la revendication 2, **caractérisé en ce qu'**un canal de service (OCH) est affecté à chaque signal de charge utile (WS).

4. Procédé selon la revendication 1 ou 3, **caractérisé en ce que**
la même marque temporelle (ZM) générée par l'ensemble de mesurage côté émetteur (MQ) est utilisée pour plusieurs trajets de transmission (OMS1, OMS2, ...) ou sections de trajet (OTS) ,
les résultats de mesure (MEQ1, MEQ2, ...) de plusieurs trajets de transmission (OMS1, OMS2, ...) ou sections de trajet (OTS) sont transmis sur le canal de service (OCH) et
les valeurs de mesure sont transmises au point central par l'ensemble de mesurage de la dernière section de trajet (OMS2).

5. Procédé selon l'une des revendications 2 à 4, **caractérisé en ce que** la même marque temporelle (ZM) générée par l'ensemble de mesurage côté émetteur (MQ) est utilisée par l'ensemble de mesurage côté récepteur (MS) pour des mesures dans plusieurs canaux de transmission WDM.

6. Procédé selon l'une des revendications 1 à 5, **caractérisé en ce que** les valeurs de mesure (MEQ) sont transmises en tant que signal de multiplexage temporel dans un canal de service (OCH).

7. Procédé selon la revendication 6, **caractérisé en ce que** la marque temporelle (ZM) et les valeurs de mesure (MEQ) sont transmises en tant que signal de multiplexage temporel dans un canal de service (OCH).

8. Procédé selon l'une des revendications 2 à 5, **caractérisé en ce que** respectivement un canal de service (OCH) est affecté à un canal de transmission WDM par technique de superposition.

9. Procédé selon l'une des revendications précédentes,
**caractérisé en ce que**
des valeurs de mesure (MEQ, MES) allant ensemble sont évaluées dans l'ensemble de mesure côté récepteur (MS) et
la modification de la qualité de signal due au trajet de transmission (OMS1, OMS2, ...) est transmise en tant que résultat de mesure (ME) au point central (ZS).
